Europäisches Patentamt

European Patent Office

Office européen des brevets

(19)

(11) EP 0 578 024 B1

(12) ## EUROPÄISCHE PATENTSCHRIFT

(45) Veröffentlichungstag und Bekanntmachung des Hinweises auf die Patenterteilung:
**29.04.1998 Patentblatt 1998/18**

(51) Int Cl.⁶: **G01N 29/10**, G01N 29/22

(21) Anmeldenummer: **93109681.2**

(22) Anmeldetag: **16.06.1993**

(54) **Ultraschallmessgerät, insbesondere zur zerstörungsfreien Materialprüfung**

Ultrasonic measuring apparatus, especially for non-destructive testing of materials

Appareil de mesure ultrasonore, en particulier pour le contrôle non-destructif de matériaux

(84) Benannte Vertragsstaaten:
**DE FR GB IT**

(30) Priorität: **27.06.1992 DE 4221220**
**15.10.1992 DE 4234859**

(43) Veröffentlichungstag der Anmeldung:
**12.01.1994 Patentblatt 1994/02**

(73) Patentinhaber: **KRAUTKRÄMER GmbH & Co.**
**D-50354 Hürth (DE)**

(72) Erfinder:
• **Volkmann, Klaus**
**50126 Bergisch-Gladbach (DE)**

• **Pollock, Horst**
**50389 Wesseling (DE)**
• **Kickartz, Manfred**
**50354 Brühl (DE)**

(74) Vertreter: **Bauer, Wulf, Dr.**
**Bayenthalgürtel 15**
**50968 Köln (Marienburg) (DE)**

(56) Entgegenhaltungen:
**DE-A- 2 725 223      GB-A- 1 534 366**
**US-A- 3 367 173      US-A- 3 926 039**

**Beschreibung**

Die Erfindung bezieht sich auf ein Ultraschallmeßgerät, insbesondere zur zerstörungsfreien Materialprüfung, mit einem Ultraschallprüfkopf, einem Sendeteil und einem Empfänger, der einen breitbandigen logarithmischen Verstärker aufweist, welcher aus mehreren, untereinander baugleichen, hintereinandergeschalteten Verstärkerstufen aufgebaut ist.

Bei nach dem Impuls-Echo-Verfahren arbeitenden Ultraschallmeßgeräten werden Verstärker eingesetzt, die einen Verstellbereich der Verstärkung von rund $10^5$-fach (100 dB) haben. Bei linearen Verstärkern ist die Anzeige der Echos auf dem Monitor proportional mit der Empfangsspannung der Echosignale am Ultraschallprüfkopf. Bei einem logarithmischen Verstärker ist die angezeigte Echohöhe dem Logarithmus der Prüfkopfspannung proportional. Dabei hat der logarithmische Verstärker gegenüber dem linearen Verstärker einen erheblich größeren Dynamikbereich (Verhältnis des größten zum kleinsten Signal, das auf dem Monitor erkennbar ist). Nachteilig ist jedoch die durch den vergrößerten Dynamikbereich reduzierte Auflösung der Maximalamplitude und die Verformung der Signalform.

Ultraschallmeßgeräte mit Verstärkern der eingangs genannten Art sind aus dem DE-Buch J. und H. Krautkrämer "Werkstoffprüfung mit Ultraschall" 4. Aufl., Springer-Verlag, bekannt. In modernen Ultraschallgeräten und Prüfsystemen werden wegen der in zunehmendem Maße eingesetzten Rechnersteuerung elektronisch steuerbare Verstärker mehr und mehr eingesetzt. Es ist vorteilhaft, wenn der steuerbare Verstärker umschaltbar ist zwischen linearem und logarithmischem Betrieb. Dadurch kann man zwischen dem gropen Dynamikbereich, der nur mit logarithmischen Verstärkern erreichbar ist, und der sehr hohen Genauigkeit, die lineare Systeme bieten, wählen.

Bei dem vorbekannten Ultraschallmeßgerät ist der logarithmische Verstärker aus fünf einzelnen, baugleichen HF-Verstärkerstufen zusammengesetzt, die hintereinander geschaltet sind. Jede einzelne Verstärkerstufe erfüllt dabei die Bedingung, daß der Verstärkungsfaktor gleich ist, z. B. für den fünfstufigen 100 dB-Verstärker genau je 20 dB, und daß bei allen Stufen die Sättigungsgrenze, ab der das Ausgangssignal trotz steigender Ausgangsspannung konstant bleibt, ebenfalls genau gleich ist. Am Eingang dieser Kette sowie hinter jeder Verstärkerstufe wird über je eine Videogleichrichterstufe ein Videosignal abgezweigt und einer Addierstufe zugeführt.

In der Praxis läßt sich ein derartiger logarithmischer Verstärker schwierig realisieren, Probleme machen insbesondere die geforderten übereinstimmenden Eigenschaften der Verstärkerstufen.

Eine andere Art, einen logarithmischen Verstärker aus einer Reihenschaltung einzelner, baugleicher Verstärkerstufen zusammenzustellen, ist aus dem Datenblatt der Firma Plessey über den integrierten Verstärker SL 531 C bekannt, dort wird eine unsymmetrische Differenzverstärkerstufe mit zwei ineinander geschachtelten Differenzverstärkern beschrieben und wird in einem Ausführungsbeispiel durch Reihenschaltung von sechs derartigen Verstärkern ein logarithmischer Verstärker realisiert. Bei diesem erscheint nur am Ausgang der Kette das logarithmierte Signal, eine Addierstufe ist nicht erforderlich. Jeder der beiden Differenzverstärker einer Verstärkerstufe hat eine ihm zugeordnete Konstantstromquelle, die beiden Konstantstromquellen können von außen gemeinsam gestellt werden. Eine individuelle Einstellung einer einzelnen Konstantstromquelle im integrierten Verstärker ist nicht möglich.

Auch bei diesem logarithmischen Verstärker ergeben sich Probleme bei Abweichungen der Kennlinien der einzelnen hintereinander geschalteten Verstärkerstufen. Im praktischen Betrieb ist es nicht zu erreichen, daß alle Verstärkerstufen ausreichend übereinstimmende Eigenschaften haben. Damit hat der vorbekannte Verstärker stets eine Charakteristik, die mehr oder weniger deutlich von der gewünschten logarithmischen Charakteristik abweicht.

Aus DE-B-2725223 ist ein Tiefenausgleichsverstärker für Ultraschall-Bildgeräte bekannt, der zumindest bereichsweise einen zeitlich exponentiell ansteigenden Verstärkungsverlauf aufweist. Bei ihm ist mittels Exponentialzeitglied eine beliebige zeitlich abklingende Exponentialfunktion in den erwünschten Bereichen vorgebbar, die mittels Invertierglied in eine exponentiell ansteigende Verstärkung umwandelbar ist. Der Verstärker besteht aus drei Verstärkerstufen, von denen zumindest die erste anders aufgebaut ist als die nachfolgenden Stufen. Eine Einstellung der Kennlinien der hintereinander geschalteten Verstärkerstufen ist nicht vorgesehen.

Hier setzt nun die Erfindung ein. Sie hat es sich zur Aufgabe gemacht, das Ultraschallgerät der eingangs genannten Art dahingehend weiterzuentwikkeln, daß der logarithmische Verstärker der eingangs genannten Art jeweils so einstellbar ist, daß seine Kennlinie auch auf Dauer möglichst wenig von einer logarithmischen Verstärkungskurve abweicht.

Diese Aufgabe wird gelöst ausgehend von dem Ultraschallmeßgerät mit den Merkmalen des Patentanspruchs 1.

Dieser Verstärker für ein Ultraschall-Meßgerät arbeitet nach dem Prinzip der oben genannten integrierten Verstärkerstufen der Firma Plessey. Die Verstärkungskennlinie jeder einzelnen Verstärkerstufe hat zwei Bereiche. Bei kleinen Eingangssignalen hat die Verstärkerstufe einen Verstärkungsfaktor gröper als 1, beispielsweise 10 dB, bei größeren Signalen ist die Verstärkung 1. Die Verstärkungskennlinie hat also einen "Knick", Verstärkerstufen dieser Art werden daher häufig auch als "Knick-Verstärker" bezeichnet. Durch Hintereinanderschalten einer ausreichenden Anzahl derartiger Verstärkerstufen erreicht man die gewünschte logarithmische Verstärkungskennlinie des Verstärkers.

Die Erfindung sieht nun weiterhin vor, daß beide Konstantstromquellen jeder einzelnen Verstärkerstufe der hintereinander geschalteten Verstärkerstufen individuell eingestellt werden können. Hierdurch wird es möglich, Unterschiede der einzelnen Verstärkerstufen untereinander auszugleichen und die Verstärkerstufen auf im wesentlichen identische Kennlinien einzustellen. Diese Einstellung kann zu beliebigen Zeitpunkten erfolgen, nämlich immer dann, wenn sie vom Anwender gewünscht ist oder wenn eine merkliche Abweichung von der gewünschten Verstärkungskennlinie gemessen wird.

Die Erfindung ermöglicht somit erstmals eine individuelle Angleichung der in einer Kette zusammengefaßten, baugleichen Verstärkerstufen, dadurch läßt sich die gewünscht logarithmische Verstärkungskennlinie so gut wie möglich annähern. Insbesondere aber kann die maximale Abweichung vom rein logarithmischen Verlauf eingegeben werden, so daß für ein mit dem Verstärker ausgerüstetes Ultraschall-Meßgerät ein Anwender den maximalen Fehler kennt, der in einem Meßergebnis auftreten kann.

Über den Digital-Analog-Wandler, im folgenden D/A-Wandler genannt, ist die individuelle Einstellung einer Konstantstromquelle einer Verstärkerstufe möglich. Die digitalen Daten erhält der D/A-Wandler von der Datenverarbeitungseinheit. In ihr läuft ein geeignetes Programm, mit dessen Hilfe der Abgleich der einzelnen Verstärkerstufen des Verstärkers erfolgt. Gesteuert wird die Datenverarbeitungseinheit ihrerseits durch Eingangssignale, die sie von einer Kalibrierungseinheit erhält. Diese ist einerseits mit dem Eingang und andererseits mit dem Ausgang des Verstärkers aus den hintereinander geschalteten Verstärkerstufen verbindbar. Sie ermöglicht es, eingangsseitig Signale unterschiedlicher Amplituden anzulegen und die jeweils erhaltenen Ausgangssignale zu erfassen. Aus der Abweichung der Ausgangssignale vom zu erwartenden Wert bei exakt logarithmischer Kennlinie werden Stellinformationen erhalten, die in der Datenverarbeitungseinheit aufbereitet und zu Informationen bearbeitet, die den einzelnen D/A-Wandlern zugeleitet werden.

Da die Einstellung einer einzelnen Verstärkerstufe Auswirkungen auf die anderen Verstärkerstufen hat, müssen bei der Einstellung alle Verstärkerstufen berücksichtigt werden. Wenn der Verstärker n Verstärkerstufen aufweist, muß also die Datenverarbeitungseinheit alle n Verstärkerstufen so abgleichen und aufeinander abstimmen, daß das optimale Ergebnis, nämlich eine möglichst gut angenäherte logarithmische Verstärkungskurve, erreicht wird. Vorzugsweise läuft in der Datenverarbeitungseinheit ein Konvergenzprogramm, das es ermöglicht, die n Einstellvorgänge jeder einzelnen Verstärkerstufe so aufeinander abzustimmen, daß am Schluß ein optimales Ergebnis erzielt wird. Aber auch ohne derartiges Konvergenzprogramm eröffnet das erfindungsgemäße Ultraschall-Meßgerät die Möglichkeit, die Abweichungen jeder einzelnen Verstärkerstufe von vorgegebenen Sollwerten zu minimieren. Es wird dann zwar nicht die optimale Annäherung an die logarithmische Verstärkungskurve erzielt, jedoch ist für jeden Einzelfall die Maximalabweichung von der logarithmischen Verstärkungskurve bekannt.

Eine besonders vorteilhafte Weiterbildung des erfindungsgemäßen Verstärkers besteht darin, diesen auch für lineare Verstärkung auszurüsten, indem die Konstantstromquellen so eingestellt werden, daß der "Knickpunkt" entweder bei 0 liegt, dann hat die gesamte Verstärkerstufe den Verstärkungsfaktor 1, oder im Bereich der Sättigung der Verstärkerstufe liegt, dann hat die gesamte Verstärkerstufe eine vorgegebene Verstärkung Vo. Da jede einzelne Verstärkerstufe der Kettenschaltung aus n Verstärkerstufen auf den einen oder den anderen Verstärkungsfaktor eingestellt werden kann, kann die Gesamtverstärkung des linearen Verstärkers zwischen 1 und $Vo^n$ eingestellt werden.

Zu Differenzverstärkern allgemein wird auf das DE-Buch "Halbleiterschaltungstechnik", Tietze und Schenk, 5. Aufl., Springer Verlag, verwiesen.

Die lineare Gesamtverstärkung einer Serienschaltung von mehreren Differenzverstärkerstufen der erfindungsgemäßen Art wird dadurch verstellt, daß eine oder mehrere Differenzverstärkerstufen zwischen V = 1 und V = Vo verstellt werden. Sind alle Differenzverstärkerstufen auf V = Vo gestellt, so hat der Verstärker seine höchste Verstärkung, näm-lich Vges = $Vo^n$, wobei n die Anzahl der hintereinander geschalteten Differenzverstärkerstufen ist. Die kleinste Verstärkung wird erreicht, wenn alle n-Differenzverstärkerstufen auf V = 1 geschaltet sind, dann beträgt die Gesamtverstärkung ebenfalls 1. Dazwischen können die Gesamtverstärkungen Vges mit dem Wert von Vo, von $Vo^2$, von $Vo^3$ ... eingestellt werden. Wählt man für Vo beispielsweise den Wert 10 dB und wählt die Stufenzahl n = 8, so kann die Gesamtverstärkung in Zehnerschritten zwischen 0 und 80 dB eingestellt werden.

Bei Umschaltung im linearen Betrieb zwischen zwei unterschiedlichen Verstärkungsfaktoren tritt am Ausgang der Differenzverstärkerstufe kein Spannungssprung auf. Hierin liegt ein Vorzug der erfindungsgemäßen Anordnung. Im linearen Betrieb wird die dritte Konstantstromquelle mit dem Stromwert I2 nicht benutzt. Zur Umschaltung zwischen der Verstärkung V = 1 und der Verstärkung V = Vo wird mittels eines Wechselschalters die zweite Konstantstromquelle mit dem Stromwert I1-Halbe entweder parallel der ersten, gleichgroßen Stromquelle I1-Halbe geschaltet, in diesem Fall ist der zweite Differenzverstärker der Differenzverstärkerstufe stromlos, oder sie wird auf den Einspeispunkt des zweiten Differenzverstärkers geschaltet, dann sind beide Differenzverstärker der Differenzverstärkerstufe aktiv. In beiden Fällen ist der Gesamtstrom somit I1, so daß beim Umschalten am gemeinsamen Kollektorwiderstand jedes Zweiges keine Spannungsänderung auftritt.

Weitere Vorteile und Merkmale der Erfindung ergeben sich aus den übrigen Ansprüchen sowie der nun folgenden Beschreibung von drei nicht einschränkend zu verstehenden Ausführungsbeispielen, die unter Bezugnahme auf die Zeichnung näher erläutert werden. In dieser zeigen:

Fig. 1     ein Schaltbild einer Differenzverstärkerstufe mit zwei ineinander geschachtelten Differenzverstärkern,

Fig. 2     eine Darstellung der Kennlinie Uout über Uin für die drei Schaltzustände einer Differenzverstärkerstufe,

Fig. 3     ein Blockschaltbild eines Verstärkers mit n Verstärkerstufen, einer Datenverarbeitungseinheit und einem Kalibrierungsteil und

Fig. 4     ein Blockschaltbild eines Ultraschallmeßgerätes.

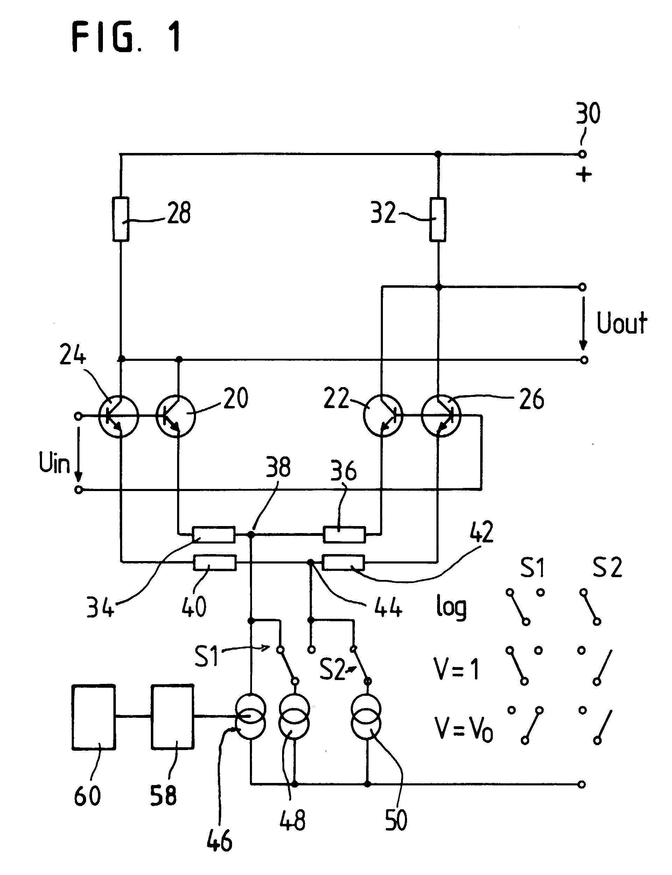

Die aus Fig. 1 ersichtliche Verstärkerstufe ist transistorbestückt und symmetrisch aufgebaut. Sie besteht aus einem ersten Differenzverstärker mit den beiden Transistoren 20, 22, im folgenden aufgrund ihrer Anordnung in Fig. 1 auch die inneren Transistoren genannt, und einem zweiten Differenzverstärker mit zwei Transistoren 24, 26, im folgenden auch als äußere Transistoren bezeichnet. Die beiden linken Transistoren 20, 24 und auch die beiden rechten Transistoren 22, 26 sind an ihrer Basis und an ihrem Kollektor miteinander verbunden. Eine Eingangsspannung Uin liegt einerseits zwischen den beiden miteinander verbundenen Basen der beiden linken Transistoren 20, 24 und andererseits zwischen den beiden miteinander verbundenen Basen der rechten Transistoren 22, 26 an. Die beiden Kollektoren der linken Transistoren 20, 24 sind über einen Kollektorwiderstand 28 an den Pluspol einer Spannungsquelle 30 angeschlossen, gleiches gilt für die beiden miteinander verbundenen Kollektoren der rechten Transistoren 22, 26, die über einen Kollektorwiderstand 32 an die Spannungsquelle 30 angeschlossen sind. Die Widerstandswerte der beiden Kollektorwiderstände 28, 32 sind gleich.

Die Emitter der beiden inneren Transistoren 20, 22 sind jeweils mit einem Gegenkopplungswiderstand 34, 36 mit einem ersten Einspeispunkt 38 verbunden, ebenso sind die beiden Emitter der äußeren Transistoren 24, 26 über je einen Gegenkopplungswiderstand 40, 42 mit einem zweiten Einspeispunkt 44 verbunden.

Der erste Einspeispunkt 38 ist mit einer ersten, einstellbaren Konstantstromquelle 46, die bei Normaleinstellung den Strom I1/2 liefert, ständig verbunden. Weiterhin sind die beiden Einspeispunkte 38 und 44 über zwei weitere, nichtstellbare Konstantstromquellen 48 und 50 eine schematisch dargestellte Schalteranordnung S1, S2 verbindbar, auf die im folgenden eingegangen wird. Sie besteht aus einem Wechselschalter SI (in Fig. 1 links) und einem Einschalter S2 (in Fig. 1 rechts). Diese können drei unterschiedliche Konfigurationen bzw. Schalterstellungen einnehmen, die in Fig. 1 rechts unten dargestellt sind. Die zweite Konstantstromquelle 48 liefert den Strom I1/2, der exakt mit dem Strom der ersten Konstantstromquelle 46 übereinstimmt. Die dritte Konstantstromquelle 50 liefert den Strom I2. In der praktischen Ausführung sind die Schalter als elektronische Schalter ausgebildet.

In der vollständigen Schaltung gemäß Fig. 1 ist die Schalterstellung "logarithmisch" dargestellt, diese ist zugleich auch rechts oben in den drei übereinander stehenden Schalterstellungen gezeigt. Bei ihr ist die zweite Konstantstromquelle 48 parallel zur ersten Konstantstromquelle 46 geschaltet, so daß in den ersten Einspeispunkt 38 der Strom I1 eingespeist wird. Die dritte Konstantstromquelle 50 ist mit dem zweiten Einspeispunkt 44 verbunden, so daß in diesen der Strom I2 eingeleitet wird.

In der Schalterstellung V = 1, also Gesamtverstärkung der gezeigten Differenzverstärkerstufe gleich eins, sind die beiden inneren Transistoren 20, 22, die den ersten Differenzverstärker bilden, wie bei logarithmischer Schalterstellung betrieben, in den ersten Einspeispunkt 38 wird also der aus den beiden parallel geschalteten Konstantstromquellen 46 und 48 gelieferte Gesamtstrom 11 eingespeist. In diesem Fall ist jedoch der zweite Differenzverstärker aus den beiden äußeren Transistoren 24, 26 stromlos.

Auch in der Schalterstellung V = Vo wird die dritte Konstantstromquelle 50 nicht benötigt. In den ersten Einspeispunkt 38 und in den zweiten Einspeispunkt 44 wird jeweils über die erste Konstantstromquelle 46 bzw. über die zweite Konstantstromquelle 48 der Strom I1/2 eingespeist.

Die Widerstandswerte der beiden gleich großen Kollektorwiderstände 28, 32 sind etwa so groß wie die Widerstandswerte der beiden effektiven Gegenkopplungswiderstände 34, 36, welche untereinander gleich sind, so daß der erste Differenzverstärker bestehend aus den beiden inneren Transistoren 20, 22 den Verstärkungsfaktor V = 1 hat.

Auch die beiden effektiven Gegenkopplungswiderstände 40, 42 der beiden äußeren Transistoren 24, 26 sind gleich groß, ihr Widerstandswert ist aber wesentlich kleiner als derjenige der gleichgroßen Widerstände 28, 32, 34, 36. Dadurch hat der zweite Differenzverstärker, der aus den beiden äußeren Transistoren 24, 26 besteht, eine Verstärkung mit dem Verstärkungsfaktor V = Vo - 1.

Eine Ausgangsspannung Uout fällt zwischen den beiden miteinander verbundenen Kollektoren der linken Transistoren 20, 24 und den beiden miteinander verbundenen Kollektoren der rechten Transistoren 22, 26 an. Der Stromwert I2 der dritten Konstantstromquelle 50 ist kleiner als der Stromwert der beiden gleich großen Konstantstromquellen 46 und 48, es gilt I2 < I1/2.

Bei der Schalterstellung logarithmisch arbeiten bei kleinen Eingangsspannungen Uin beide Differenzverstärker. Die Gesamtverstärkung ergibt sich als Quotient aus Kollektorwiderstand 28 oder 30 zu der Parallelschaltung aus je einem effektiven Gegenkopplungswiderstand jedes Differenzverstärkers, also beispielsweise der Gegenkopplungswiderstände 34, 40. Bei Eingangsspannungen Uin, die größer sind als I2 mal dem Wert eines Gegenkopplungswiderstandes 40 oder 42 der äußeren Transistoren 24, 26, wird der aus den beiden äußeren Transistoren 24, 26 bestehende Differenzverstärker übersteuert. Oberhalb dieses Eingangsspannungswertes Uo arbeiten dann nur noch die beiden inneren Transistoren 20, 22 des ersten Differenzverstärkers, anders ausgedrückt wird die Gesamtverstärkung nur noch durch das Verhältnis aus einem Kollektorwiderstand 28 oder 30 zum Gegenkopplungswiderstand 34 oder 36 bestimmt, dieser Wert ist 1. Oberhalb der genannten Schwelle liegt die Verstärkung daher bei V = 1.

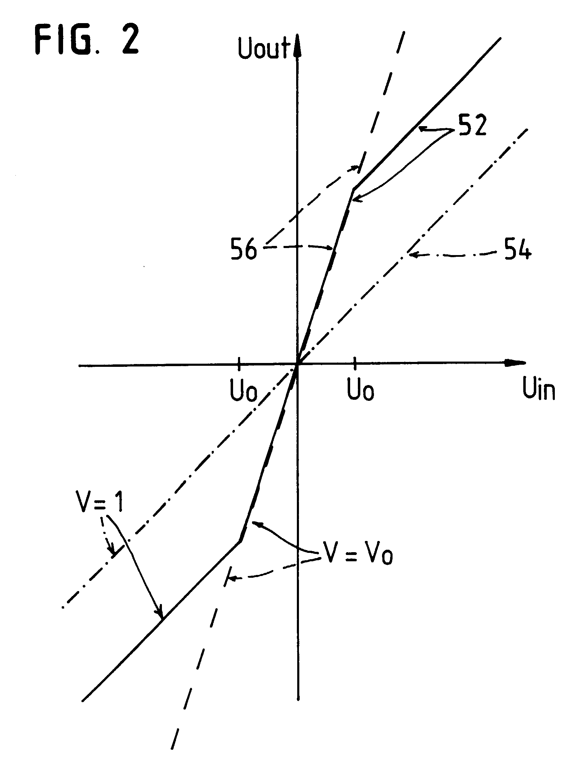

Diese Zusammenhänge sind in Fig. 2 durch den ausgezogenen Polygonzug 52 dargestellt. Er hat für Eingangsspannungen Uin im Bereich von +/- Uo, dem oben genannten Schwellenwert für die Eingangsspannung, die Steigung V = Vo und für im Absolutwert oberhalb Uo liegende Eingangsspannung Uin die Steigung V = 1.

In der Schalterstellung V = 1, also Gesamtverstärkung 1, sind die beiden äußeren Transistoren 24, 26 stromlos und arbeitet lediglich der erste Differenzverstärker aus den beiden inneren Transistoren 20, 22, dies führt zu einer Geraden 54 mit der Steigung V = 1 in Fig. 2, diese Gerade 54 ist strichpunktiert dargestellt.

In der Schalterstellung V = Vo wird in den zweiten Einspeispunkt 44 ein so hoher Strom I1/2 der zweiten Konstantstromquelle 48 eingespeist, daß der hierfür sich ergebende Schwellenwert der Eingangsspannung Uin wesentlich größer als Uo ist. Dieser zweite Schwellenwert liegt bei I1/2 mal dem Wert eines Gegenkopplungswiderstandes 40 oder 42. Dies hat zur Folge, daß nunmehr der Differenzverstärker aus den beiden äußeren Transistoren 24, 26 innerhalb des vorgesehenen Arbeitsbereichs, also der zulässigen Eingangsspannungen Uin nicht übersteuert wird, was dazu führt, daß die Differenzverstärkerstufe nunmehr durchgängig eine Gesamtverstärkung V = Vo hat, wie sie anhand der gestrichelten Geraden 56 in Fig. 2 dargestellt ist. Diese fällt teilweise mit der Kennlinie 52 für den logarithmischen Fall zusammen.

Die Schalteranordnung S1 und S2 ist nun so gewählt, daß beim Umschalten zunächst ein neuer Kontakt hergestellt wird, bevor der alte Kontakt unterbrochen wird. Dadurch ist gewährleistet, daß bei Umschalten mittels SI der zweiten Konstantstromquelle 48 vom ersten Differenzverstärker auf den zweiten Differenzverstärker nicht der Zustand auftreten kann, daß kurzzeitig beide Einspeispunkte 38, 44 nicht mit der zweiten Konstantstromquelle 48 verbunden sind. Dadurch wird erreicht, daß bei Umschaltung zwischen V = 1 und V = Vo in den beiden Kollektorwiderständen 28, 32 gemeinsam stets der Gesamtstrom I1 fließt, also kein Spannungssprung auftreten kann.

Es ist auch eine zweite, in Fig. 1 nicht dargestellte Realisierung der erfindungsgemäßen Schaltung möglich. Bei ihr hat jeder einzelne Differenzverstärker nicht einen gemeinsamen Einspeispunkt, sondern wird die Konstantstromquelle jeweils unmittelbar an den Emitter angelegt, so daß für einen einzelnen Differenzverstärker zwei Konstantstromquellen benötigt werden. In diesem Fall ist es nicht mehr nötig, zwei einzelne Gegenkopplungswiderstände vorzusehen, vielmehr genügt ein Gegenkopplungswiderstand mit dem Wert aus der Reihenschaltung der jeweiligen Gegenkopplungswiderstände. Es werden dann nicht nur drei Konstantstromquellen, sondern sechs Konstantstromquellen benötigt. Jeweils drei Stromquellen sind, wie in Fig. 1 gezeigt, über eine entsprechend wie in Fig. 1 ausgeführte Schalteranordnung den beiden linken Emittern zugeordnet, entsprechendes gilt für drei Konstantstromquellen, die über eine baugleiche Schalteranordnung den beiden rechten Emittern zugeordnet werden. Bei dieser Realisierung ist der nur eine Gegenkopplungswiderstand im Ruhestand stromlos, so daß zusätzlich noch die Gesamtverstärkung durch Verändern des Gegenkopplungswiderstandes einstellbar ist, ohne daß sich die Ausgangsspannung Uout ändert.

Die einstellbare Konstantstromquelle 46 ist eingangsseitig mit dem Ausgang eines D/A-Wandlers 58 verbunden. Er wiederum ist mit seinem Digitaleingang an den Ausgang einer Datenverarbeitungseinheit 60 angeschlossen. Insbesondere im logarithmischen, aber auch im linearen Betriebszustand kann durch Einstellen der Konstantstromquelle 46 die Verstärkerstufe kalibriert werden, also auf vorgegebene Sollwerte eingestellt werden. Dies ist insbesondere im logarithmischen Betriebszustand vorteilhaft, weil dann die einzelnen Verstärkerstufen insgesamt auf eine möglichst gut approximierte logarithmische Verstärkungskurve eingestellt werden können. Aber auch im linearen Betriebszustand ergeben sich Vorteile, weil die lineare Gesamtverstärkung präziser vorgegeben werden kann.

Es ist möglich, nicht nur die Konstantstromquelle 46 einstellbar zu machen, sondern auch die anderen Konstantstromquellen. Es besteht auch die Möglichkeit, die Konstantstromquelle 46 in einem so großen Bereich einstellbar zu machen, daß die zweite Konstantstromquelle 48 völlig entfallen kann. Dann werden pro Verstärkerstufe nur zwei Konstantstromquellen benötigt. Dabei macht man sich die Einstellbarkeit der Konstantstromquelle 46 über die Datenverarbeitungseinheit 60 zunutze. Bei rein logarithmischen Verstärkern ist die zweite Konstantstromquelle 48 nicht erforderlich, wenn die Konstantstromquelle 46 im Bereich um I1 einstellbar ist.

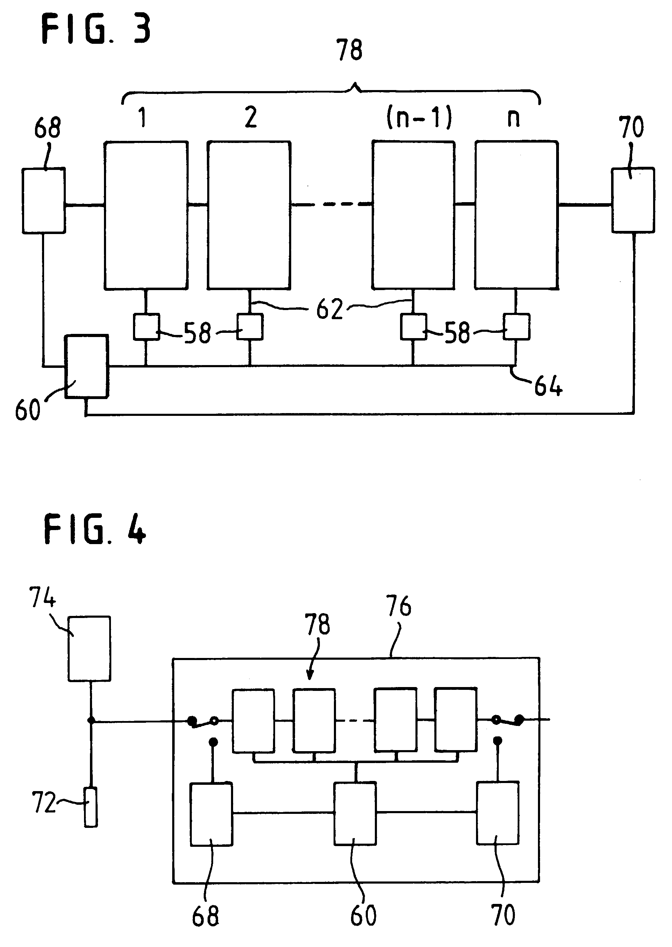

Fig. 3 zeigt in Form eines Blockschaltbildes einen vollständigen Verstärker, der aus den Verstärkerstufen gemäß den Fig. 1 und 2 aufgebaut ist. Der Verstärker hat insgesamt n derartiger Verstärkerstufen, die hier mit den Bezugsziffern 1, 2 ... (n-1), n bezeichnet sind. In jeder einzelnen Verstärkerstufe befindet sich eine Konstantstromquelle 46, die einstellbar ist. Sie ist jeweils über eine Leitung 62 mit einem D/A-Wandler 58 verbunden. Die insgesamt n D/A-Wandler 58 sind über eine Busleitung 64 mit der Datenverarbeitungseinheit 60 verbunden. Diese wiederum ist mit einer Kalibriereinheit verbunden, die im wesentlichen aus einem Eingangsteil 68 und einem Ausgangsteil 70 besteht. Der Eingangsteil produziert Spannungen unterschiedlicher Amplituden, die jeweils an den Eingang des Verstärkers, also an die erste Verstärkungsstufe 1, angelegt werden. Der Ausgangsteil 70 mißt die am Ausgang des Verstärkers anstehenden Ausgangssignale für jede einzelne Eingangsspannung. Aus den Abweichungen der Ausgangssignale zum zu erwartenden Sollwert erhält die Datenverarbeitungseinheit Informationen, wie die einzelnen Konstantstromquellen 46 zu stellen sind.

Die Kalibration des logarithmischen Verstärkers kann nach einem iterativen Verfahren erfolgen. Gute Erfolge wurden mit einem auf dem Newton-Verfahren beruhenden Kalibrationsverfahren erzielt.

Bei dem n-stufigen Verstärker sollen die "Knickspannungen" jeder einzel nen Verstärkerstufe 1, 2 ... (n-1), n in einem Abstand von a dB liegen. Zunächst werden für alle Verstärkerstufen die nominalen Steuerströme für einen Strom I1 eingestellt. Der Eingangsteil 68 produziert nun schrittweise n Test-Eingangssignale mit Amplituden in Schritten von a dB, die im Definitionsbereich der logarithmischen Kennlinie liegen müssen. Die zugehörigen Ausgangsamplituden werden mittels des Ausgangsteils 70 gemessen. Als praktisch hat sich erwiesen, die "Knickspannungen" $U_1 ... U_n$ zu wählen. Die gemessenen Ausgangspegel werden im allgemeinen von der erwarteten Geraden abweichen. Aus den Abweichungen werden durch eine lineare Transformation verbesserte Werte für die Steuerströme I1 bestimmt.

Dieser Vorgang wird so oft wiederholt, bis die gemessenen Abweichungen kleiner als ein vorgegebener Schwellenwert für eine Toleranz sind.

Im einzelnen arbeitet das Verfahren wie folgt: Für einen vorgegebenen logarithmischen Verstärker erwartet man einen angenähert linearen Zusammenhang zwischen logarithmischen Eingangspegeln $U_{dB}$ und den Ausgangssignalen $U_A$.

$$(1) \qquad U_A^{soll}(U_{dB}) = c_o + c_1 * U_{dB}$$

worin

$$(2) \qquad U_{dB} = 20 * \log_{10}(U_E / U_0), \ U_0 \leq U_E \leq n * U_0$$

bedeutet. Die Koeffizienten $c_0$ und $c_1$ ergeben sich aus der speziellen Dimensionierung des Verstärkers.

Die Abweichung der gemessenen Ausgangssignale von der angestrebten Ausgangscharakteristik gemäß Gleichung (1) in dB ist

$$(3) \qquad \delta F = \frac{U_A^{ist}(U_{dB}) - U_A^{soll}(U_{dB})}{c_1}$$

$U_A^{ist}(U_{dB})$ ist darin der tatsächliche Zusammenhang zwischen Eingangssignal in dB und der Ausgangsspannung.

Die Aufgabe besteht nun darin, aus den n gemessenen Abweichungen $\delta F_i$ (i = 0...n) Korrekturen für die n Steuerströme $\delta I_{ST,j}$ (j = 0... n) zu finden, so daß anschliepend die $\delta F$ möglichst klein werden. Wegen der wechselseitigen Abhängigkeiten zwischen den Verstärkerstufen wird hierfür der allgemeinste lineare Ansatz gewählt:

$$(4) \qquad \delta F^{(n)}_{neu} = \delta F^{(n)}_{alt} - D * \delta I_{ST}^{(n)}$$

Darin sind die mit $^{(n)}$ bezeichneten Größen n-dimensionale Spaltenvektoren. Die $\delta F^{(n)}$ enthalten die Abweichungen vom erwarteten dB-linearen Zusammenhang an den n Meßstellen, $\delta I_{ST}^{(n)}$ enthält die Korrekturen für die Steuerströme der n Verstärkerstufen. D ist eine n * n-Matrix, deren Komponenten durch die partiellen Ableitungen

$$(5) \qquad D_{ij} = \frac{d(\delta F)_i}{dI_{ST,j}}$$

gegeben sind. Um $\delta F$ (in linearer Näherung) im nächsten Iterationsschritt zu 0 zu machen, mup man die Verbesserung der Steuerströme gemäß

$$(6) \qquad \delta I_{ST}^{(n)} = D^{-1} * \delta F^{(n)}$$

wählen, worin $D^{-1}$ die invertierte Matrix bedeutet.

Zur Bestimmung der Matrix D bzw. $D^{-1}$ kommen zwei Verfahren Frage: Die partiellen Ableitungen können für jede individuelle Schaltung bei jedem Iterationsschritt gemessen und für eine typische Schaltung theoretisch berechnet werden.

Das erste Verfahren konvergiert theoretisch am schnellsten, erfordert aber eine große Zahl von Messungen (72 pro Schritt bei einem achtstufigen Verstärker) und ist empfindlich gegen Meßfehler. Deshalb wird das zweite Verfahren gewählt. Die Matrix wird aus den Ergebnissen der Schaltungssimulation mit toleranzfreien Bauelementen gewonnen. Die invertierte Matrix wird ein- für allemal berechnet. Deshalb sind nur n Messungen pro Iterationsschritt und eine Multiplikation eines Vektors mit einer Matrix notwendig.

Simulationen zeigen, dap es von der Dimensionierung des Verstärkers abhängt, ob die Bedingungen für die Konvergenz des Newton-Verfahrens erfüllt sind. Es lassen sich aber Dimensionierungen finden, die sowohl die Anforderungen erfüllen als auch ein gutes Konvergenzverhalten zeigen.

Ein anderes Problem stellt der Einfluß des Meßfehlers durch Rauschen bei niedrigen Eingangspegeln dar. Dem kann durch Einführung von Gewichten Rechnung getragen werden. Gleichung (5) ist dann etwa gemäß

$$(5') \qquad D_{ij} = w_i * \frac{d(\delta F)_i}{dI_{ST,j}}$$

zu modifizieren, worin $W_i$ ein für den i-ten Eingangspegel charakteristischer Gewichtsfaktor ist. Für große Eingangssignale ist $w_i$ ungefähr 1, für kleine Eingangssignale sind kleinere $w_i$ zu wählen. Die Konvergenz wird für niedrige Pegel langsamer. Dafür werden die Ergebnisse für hohe Pegel weniger gestört.

Die Gewichte können aufgrund von theoretischen Überlegungen oder durch praktische Versuche bestimmt werden.

Fig. 4 zeigt in Form eines Blockschaltbildes das Ultraschallmeßgerät nach der Erfindung. Ein Sendeteil 74 liefert Impulse an einen Ultraschall-Prüfkopf 72, von diesem aufgenommene Echos werden im Empfänger 76, der den erfindungsgemäßen Verstärker 78 aufweist, verstärkt.

## Patentansprüche

1. Ultraschall-Meßgerät, insbesondere zur zerstörungsfreien Materialprüfung, mit einem Ultraschallprüfkopf (72), einem Sendeteil (74) und einem Empfänger (76), der einen breitbandigen logarithmischen Verstärker (78) aufweist, welcher aus mehreren, untereinander baugleichen, hintereinandergeschalteten Verstärkerstufen aufgebaut ist, dadurch gekennzeichnet, daß jede Verstärkerstufe jeweils zwei transistorisierte Einzelverstärker aufweist, nämlich einen ersten und einen zweiten Differenzverstärker, die ineinander geschachtelt sind, die jeweils einen linken Transistor (20, 24) und einen rechten Transistor (22, 26) aufweisen, wobei die beiden linken Transistoren (20, 24) jeweils an ihrer Basis und an ihrem Kollektor miteinander verbunden sind, ebenso die rechten Transistoren (22, 26) jeweils an ihrer Basis und an ihrem Kollektor miteinander verbunden sind und alle Transistoren (20, 22; 24, 26) an ihren Emittern über Gegenkopplungswiderstände (34, 36; 40, 42) an mindestens eine Konstantstromquelle (46, 50) angeschlossen sind, wobei jedem Differenzverstärker mindestens eine Konstantstromquelle (46,50) zugeordnet ist, und daß in jeder Verstärkerstufe zumindest die Konstantstromquelle (46) eines der beiden Differenzverstärker einer Verstärkerstufe einstellbar ist und eingangsseitig mit einem Digital-Analog-Wandler (58) verbunden ist, der an eine Datenverarbeitungseinheit (60) angeschlossen ist, welche Korrekturdaten zur Kalibrierung jeder angeschlossenen Konstantstromquelle (46) jeder einzelnen Verstärkerstufe gibt.

2. Ultraschall-Meßgerät nach Anspruch 1, dadurch gekennzeichnet, daß jede Verstärkerstufe zwei Konstantstromquellen (46, 50) aufweist, die beide einstellbar sind.

3. Ultraschall-Meßgerät nach Anspruch 1, dadurch gekennzeichnet, daß einer der beiden Einzelverstärker jeder Verstärkerstufe zwei Konstantstromquellen (46, 48) aufweist, von denen eine einstellbar ist.

4. Ultraschall-Meßgerät nach einem der Ansprüche 1 bis 3, dadurch gekennzeichnet, daß eine Kalibrierungseinheit vorgesehen ist, die aus einem Eingangsteil (68), das Eingangsspannungen unterschiedlicher Pegel liefert, und einem Ausgangsteil (70) besteht, das die am Ausgang des Verstärkers für die unterschiedlichen Eingangsspannungen entstehenden Ausgangsspannungen erfaßt, und daß die Kalibriereinheit mit der Datenverarbeitungseinheit (60) verbunden ist.

5. Ultraschall-Meßgerät nach Anspruch 4, dadurch gekennzeichnet, daß ein iteratives Kalibrationsverfahren durchgeführt wird, bei dem zunächst für alle Verstärkerstufen die nominalen Konstantströme I1 eingestellt werden und n Test-Eingangssignale an den Eingang des Verstärkers (78) angelegt werden, wobei n die Anzahl der Verstärkerstufen ist, und die Ausgangsamplituden mittels des Ausgangsteils (70) erfaßt werden, wobei aus den Abweichungen von dem erwarteten proportionalen Zusammenhang zwischen Eingangsspannungen und Ausgangsspannungen verbesserte Werte für die Konstantströme in der Datenverarbeitungseinheit (60) ermittelt werden.

6. Ultraschallmeßgerät nach Anspruch 1, dadurch gekennzeichnet, daß der Verstärker zwischen linearem und logarithmischem Betrieb umstellbar ist, indem jeder Verstärkerstufe eine Schalteranordnung (S1, S2) zugeordnet ist, so daß sie umschaltbar ist zwischen einer Verstärkung V = 1, einer Verstärkung V = Vo und einer Verstärkung mit folgender Kennlinie:
   V = Vo für Eingangsspannungen Uin ≤ Uo und V = für Uin > Uo.

7. Ultraschallmeßgerät nach Anspruch 6, dadurch gekennzeichnet, daß die beiden Gegenkopplungswiderstände (34, 36) des ersten Differenzverstärkers so groß gewählt sind, daß dessen Verstärkung V = 1 ist und die Gegenkopplungswiderstände (40, 42) des zweiten Differenzverstärkers kleiner sind als diejenigen des ersten Differenzverstärkers und so gewählt sind, daß dessen Gesamtverstärkung V = Vo ist, daß zusätzlich zur einstellbaren Konstantstromquelle (46) zwei weitere Konstantstromquellen (48, 50) vorgesehen sind, und daß die drei Konstantstromquellen (46 bis 50) über eine Schalteranordnung an die beiden Differenzverstärker gelegt werden können, von denen zwei (46, 48) den Strom 0,5 * I1 liefern, während die Dritte (50) den Strom I2 liefert und die über die Schalteranordnung entsprechend der nachfolgenden Tabelle mit Einspeispunkten (38, 44) der beiden Differenzverstärker verbindbar sind:

| Schalterstellung | Einspeispunkt 1 | Einspeispunkt 2 |
|------------------|-----------------|-----------------|
| log | I1/2 + I1/2 | I2 |
| V = 1 | I1/2 + I1/2 | - |
| V = Vo | I1/2 | I1/2 |

8. Ultraschallmeßgerät nach Anspruch 1, dadurch gekennzeichnet, daß die zusammengeschalteten Kollektoren der beiden linken Transistoren (20, 24) und die beiden zusammengeschalteten Kollektoren der beiden rechten Transistoren (22, 26) jeder Verstärkerstufe jeweils über einen Kollektorwiderstand (28, 32) an eine Spannungsversorgung (30) angeschlossen sind und daß der Wert jedes Kollektorwiderstan des (28, 32) gleich ist dem Wert der Gegenkopplungswiderstände des ersten Differenzverstärkers.

9. Ultraschallmeßgerät nach Anspruch 6 bis 8, dadurch gekennzeichnet, daß die Schalteranordnung (S1, S2) so ausgebildet ist, daß beim Umschalten eine elektrische Verbindung mit dem neuen Schaltkontakt zunächst hergestellt wird, bevor die elektrische Verbindung mit dem alten Schaltkontakt unterbrochen wird.

10. Ultraschallmeßgerät nach einem der Ansprüche 6 bis 9, dadurch gekennzeichnet, daß der Strom 0,5 * I1 gröper ist als der Strom I2, vorzugsweise mindestens 3-fach, insbesondere mindestens 5-fach gröper ist.

## Claims

1. An ultrasonic measuring device that is especially suited to nondestructive testing of materials is fitted with an ultrasound test head (72), a transmitter (74) and a receiver (76), which in corporates a broadband logarithmic amplifier (78), consisting of several amplification stages that are identical in construction and connected in series, characterized in that each amplification stage contains two transistorized individual amplifiers, namely a first and a second differential amplifier that are connected to one another and show a left transistor (20, 24) and a right transistor (22, 26) respectively, whereby the two left transistors (20, 24) are each interconnected at their base and at their collector, wherein likewise the two right transistors (22, 26) are each interconnected at their base and at their collector and wherein each of these transistors (20, 22; 24, 26) is connected at the emitter via inverse feedback resistors (34, 36; 40, 42) to at least one constant-current source (46, 50); each differential amplifier having at least one constant-current source (46, 50), that in each amplification stage at least the constant-current source (46) of one of the two differential amplifiers of an amplification stage is variable and is connected on its input side to a digital analog transformer (58) that is connected to a data processing unit (60), which provides corrections for calibrating each connected constant-current source (46).

2. An ultrasound measuring device in accord with claim 1, characterized by the fact that each amplification stage is equipped with two constant-current sources (46, 50); of these, both are variable.

3. An ultrasonic measuring device in accord with claim 1, characterized by the fact that one of the two individual amplifiers on each amplification stage is equipped with two constant-current sources (46, 50); of these, one is variable.

4. An ultrasonic measuring device in accord with one of the claims 1 to 3, characterized by the fact that it is equipped with a calibration unit, which is composed of an input section (68) that provides input voltages of various levels and an output component (70) that picks up the output voltages that arise for the various input voltages at the amplifier exit, the calibration unit being connected to the data processing (60) unit.

5. An ultrasonic measuring device in accord with claim 4, characterized by the fact that an iterative process is implemented, in which the nominal constant currents I1 are first set for all amplification stages and n test signals are directed to the amplifier input (78), with n being the number of amplifier stages; and wherein the output amplitudes are picked up via the output section (70), and corrected values for the constant currents are calculated in the data processing (60) unit from the deviations from the expected proportional relationship between input voltages and output voltages.

6. An ultrasonic measuring device in accord with claim 1, characterized by the fact that the amplifier can be adjusted between linear and logarithmic mode of operation using a switch arrangement (S1, S2) for each amplification stage, thereby switching between an amplification V = 1, an amplification V = Vo and an amplification with the following characteristic curve:
V = Vo for input voltages Uin ≤ Uo and V = 1 for Uin > Uo.

7. An ultrasonic measuring device in accord with claim 6, characterized by the fact that the values of the two inverse feedback resistances (34, 36) of the first differential amplifier are selected in such a way that its amplification is V = 1, and the inverse feedback resistances (40, 42) of the second differential amplifier are smaller than those of the first differential amplifier and selected in such a way that its total amplification is V = Vo; and in addition to the adjustable constant-current source (46) with the presence of two further constant-current sources (48, 50), the three constant-current sources (46 to 50) can be connected via a switch arrangement to the two differential amplifiers, with two of them (46, 48) providing the current 0,5 x I1 while the third (50) delivers the current I2, thereby providing the capacity to be connected via the switching arrangement to input points (38, 44) on the two differential amplifiers in accord with the following table:

| switching position | input point 1 | input point 2 |
|---|---|---|
| log | 0,5 x I1 + 0,5 x I1 | I2 |
| V = 1 | 0,5 x I1 + 0,5 x I1 | - |
| V = Vo | 0,5 x I1 | 0,5 x I1 |

8. An ultrasonic measuring device in accord with claim 1, characterized by the fact that the interconnected collectors of both left transistors (20, 24) and the interconnected collectors of both right transistors (22, 26) of the differential amplification stage are each connected via a collector resistance (28, 32) to a voltage supply (30) with the value of each collector resistance (28, 32) equaling the value of the inverse feedback resistances of the first differential amplifier.

9. An ultrasonic measuring device in accord with one of the claims 6 to 8, characterized by the fact that the switch arrangement (S1, S2) is constructed in such a way that, when switching occurs, electric contact is first made with the new switch contact before the electric connection to the old switch contact is interrupted.

10. An ultrasonic measuring device in accord with one of the claims 6 to 9, characterized by the fact that the current 0,5 x I1 is greater than the current I2, preferably at least three times greater and ideally at least five times greater.

**Revendications**

1. Appareil de mesure aux ultrasons, en particulier pour l'essai non destructif de matériaux, comprenant un palpeur à ultrasons (72), une partie émettrice (74) et un récepteur (76) qui présente un amplificateur (78) logarithmique à large bande, qui se compose de plusieurs étages d'amplification de construction identique entre eux et montés en série, **caractérisé en ce que** chaque étage d'amplification présente respectivement deux amplificateurs individuels transistorisés, à savoir un premier et un deuxième amplificateur différenciateur qui sont engagés l'un dans l'autre, qui présentent respectivement un transistor gauche (20, 24) et un transistor droit (22, 26), les deux transistors gauches (20, 24) étant connectés entre eux respectivement sur leur base et sur leur collecteur, de même les transistors droits (22, 26) étant eux aussi connectés entre eux respectivement sur leur base et sur leur collecteur, et tous les transistors (20, 22; 24, 26) étant reliés sur leurs émetteurs par l'intermédiaire de résistances de réaction inverse (34, 36; 40, 42) à au moins une source de courant constant (46, 50), une source de courant constant (46, 50) du moins étant associée à chacun des amplificateurs différenciateurs, et en ce que dans chaque étage d'amplification au moins la source de courant constant (46) de l'un des deux amplificateurs différenciateurs d'un étage d'amplification peut être réglée et est reliée, à son entrée, à un convertisseur numérique-analogique (58) qui est de son côté connecté à une unité de traitement de données (60) qui fournit des données de correction pour le calibrage de chaque source de courant constant (46) connectée de chaque étage particulier d'amplification.

2. Appareil de mesure aux ultrasons selon la revendication 1, caractérisé par le fait que chaque étage d'amplification présente deux sources de courant constant (46, 50) qui sont toutes les deux réglables.

3. Appareil de mesure aux ultrasons selon la revendication 1, caractérisé par le fait que l'un des deux amplificateurs individuels de chaque étage d'amplification présente deux sources de courant constant (46, 48) dont l'une est réglable.

4. Appareil de mesure aux ultrasons selon l'une des revendications 1 à 3, caractérisé par le fait que l'on prévoit une unité de calibrage qui se compose d'une partie d'entrée (68) laquelle fournit des tensions d'entrée de niveaux différents, et d'une partie de sortie (70) qui saisit les tensions de sortie produites pour les tensions d'entrée différentes sur la sortie de l'amplificateur, et que l'unité de calibrage est reliée à l'unité de traitement de données (60).

5. Appareil de mesure aux ultrasons selon la revendication 4, caractérisé par le fait que l'on effectue un procédé itératif de calibrage dans le cas duquel on règle d'abord les courants constants nominaux 1 pour tous les étages d'amplification et on applique des signaux d'entrée de test n à l'entrée de l'amplificateur (78), où n est le nombre des étages d'amplification, et dans le cas duquel les amplitudes de sortie sont saisies par l'intermédiaire de la partie de sortie (70), des valeurs améliorées pour les courants constants étant déterminées dans l'unité de traitement de données (60) à partir des écarts de la relation proportionnelle escomptée entre les tensions d'entrée et les tensions de sortie.

6. Appareil de mesure aux ultrasons selon la revendication 1, caractérisé par le fait que l'amplificateur peut être commuté entre le mode linéaire et logarithmique en associant une disposition de commutateurs (S1, S2) à chaque étage d'amplification, de sorte qu'il puisse être commuté entre une amplification V = 1, une amplification V=Vo et une amplification ayant la courbe caractéristique suivante: V = Vo pour des tensions d'entrée Uin $\leq$ Uo et V = 1 pour Uin > Uo.

7. Appareil de mesure aux ultrasons selon la revendication 6, caractérisé par le fait que les deux résistances de réaction inverse (34, 36) du premier amplificateur différenciateur sont choisies d'une telle manière que son amplification est V = 1, et que les résistances de réaction inverse (40, 42) du deuxième amplificateur différenciateur sont plus petites que celles du premier amplificateur différenciateur et sont choisies d'une telle manière que son amplification totale est V = Vo, que l'on prévoit outre la source de courant constant (46) réglable deux autres sources de courant constant (48, 50) et que les trois sources de courant constant (46 à 50) peuvent être mises, par l'intermédiaire d'une disposition de commutateurs, aux deux amplificateurs différenciateurs, dont deux (46, 48) fournissent le courant 0,5 x I1, tandis que la troisième (50) fournit le courant I2 et qui, par l'intermédiaire de la disposition de commutateurs, peuvent être connectées à des points d'alimentation (38, 44) des deux amplificateurs différenciateurs, conformément au tableau suivant:

| position du commutateur | point d'alimentation 1 | point d'alimentation 2 |
|---|---|---|
| log | 0,5 x I1 + 0,5 x I1 | I2 |
| V = 1 | 0,5 x I1 + 0,5 x I1 | - |
| V = Vo | 0,5 x I1 | 0,5 x I1 |

8. Appareil de mesure aux ultrasons selon la revendication 1, caractérisé par le fait que les collecteurs interconnectés des deux transistors gauches (20, 24) et les deux collecteurs interconnectés des deux transistors droits (22, 26) de chaque étage d'amplification sont connectés respectivement par l'intermédiaire d'une résistance collecteur (28, 32) à une alimentation en tension (30) et que la valeur de chaque résistance collecteur (28, 32) est égale à la valeur des résistances de réaction inverse du premier amplificateur différenciateur.

9. Appareil de mesure aux ultrasons selon la revendication 6 à 8, caractérisé par le fait que la disposition de commutateurs (S1, S2) est réalisée de telle manière que, lors de la commutation, une connexion électrique avec le nouveau contact de commutation est d'abord établie avant que la connexion électrique avec le vieux contact de commutation soit interrompue.

10. Appareil de mesure aux ultrasons selon l'une des revendications 6 à 9, caractérisé par le fait que le courant 0,5 x I1 est plus grand que le courant I2, de préférence trois fois du moins, en particulier cinq fois du moins plus grand.

# FIG. 1

FIG. 2

# FIG. 3

# FIG. 4